# EUROPEAN PATENT SPECIFICATION

(11) **EP 3 236 817 B1**
(45) Date of publication and mention of the grant of the patent: **20.11.2019**
(21) Application number: 15817236.1
(22) Date of filing: 17.12.2015
(51) Int. Cl.: A47J 31/44

(54) **AN INTERFACE SYSTEM FOR A BEVERAGE PREPARATION MACHINE**
SCHNITTSTELLENSYSTEM FÜR GETRÄNKEHERSTELLUNGSMASCHINE
SYSTÈME D'INTERFACE POUR MACHINE DE PRÉPARATION DE BOISSONS

(30) Priority: 24.12.2014 EP 14200304
(43) Date of publication of application: 01.11.2017
(73) Proprietor: Société des Produits Nestlé S.A., 1800 Vevey (CH)
(72) Inventor: PUGLIESE, Alexandre, 1094 Paudex (CH)
(74) Representative: Rosolen-Delarue, Katell
(86) International application number: PCT/EP2015/080335
(87) International publication number: WO 2016/102332

(56) References cited:
- EP-A1- 2 695 557
- DE-A1- 10 309 823
- DE-A1- 19 831 850
- DE-A1-102011 087 004
- US-A- 4 150 264

## Description

### Field of the invention

The present invention concerns a food or beverage preparation machine, more precisely an interface system for such a food preparation machine.

### Background of the invention

Liquid food or beverage preparation machines are well known in the food science and consumer goods areas. Such machines allow a consumer to prepare at home a given type of food or beverage, for instance a coffee-based beverage, such as espresso or filter coffee.

Today, many beverage preparation machines for in-home use comprise a system which can accommodate portioned beverage ingredients. Such portions may be contained typically in pods, sachets or capsules.

The machine comprises a receptacle or cavity for accommodating said portioned beverage ingredients and a fluid injection system for injecting a fluid, such as water, under pressure into the pod or capsule. Thus the fluid, for example hot or cold water, passes through the capsule or pod and delivers a liquid food or beverage.

The beverage preparation machine usually comprises a machine head where the receptacle for accommodating said portioned beverage ingredients is situated, and a machine body containing other functional components of the machine, such as a water pump, a water heater and a controlling unit which manage the functional components of the machine in order to prepare a beverage. The beverage is prepared taking into account beverage preparation parameters of the machine. The values of certain beverage preparation parameters are set by a user of the beverage preparation machine by means of a Human-Machine Interface (HMI).

The Human-Machine Interface comprises a control panel comprising actuators which allow the user to select and/or to set the values of certain beverage preparation parameters. For example, the control panel of current beverage preparation machines may comprise push buttons or tactile touch screen areas by means of which a user may select a recipe from among a plurality of recipes, a fluid volume, a fluid temperature, a pressure or an infusion time. According to the selections made by the user, certain beverage preparation parameters are set to predetermined values.

The Human-Machine Interface also contains electronic circuits and electric/electronic connexions between push buttons and/or tactile touch screen areas of the control panel and the electronic circuits. The user's selections are electronically treated and transmitted to the controlling unit which takes them into account in preparing the beverage.

The Human-Machine Interface is positioned in the machine head, close to the receptacle or cavity for accommodating the portioned beverage ingredients and where the fluid, such as water, is injected.

Therefore, due to the proximity of the Human-Machine Interface and the receptacle where fluid is injected, fluid flows close to the Human-Machine Interface. Even if beverage preparation machines are designed to avoid fluid leakage, in the event of leakage, electrical components may be in contact with the fluid which could lead to a short circuit that damages the beverage preparation machines.

It is therefore an object of the present invention to provide a food or beverage preparation machine which resolves at least some of the above difficulties making it possible to improve in the prevention of short circuits and thus to provide additional safety for users manipulating the interface system of the food or beverage preparation machine.

### Summary of the invention

In a first aspect of the invention, there is provided an interface system according to claim 1.

Thus, the elongate portion links the first end and the second end of the actuator and allows positioning of the pressure sensor at a distance from the first end of the actuator. A press action applied to the first end of the actuator is transmitted by the elongate portion to the second end, and the second end which is deformable, applies the received press action to the pressure sensor. Thus, a pressure sensor may be positioned at a distance from the first end while a press action applied to the first end is detected by the pressure sensor.

Therefore, the control panel of the food or beverage preparation machine may be positioned such that the pressure sensor is distant from the control panel which is a part of the food or beverage preparation machine which is accessible for a user of the beverage preparation machine. In a case of a beverage preparation machine in which the control panel is situated close to the receptacle for accommodating portioned beverage ingredients in which the fluid is injected, the pressure sensor is situated at a distance from this receptacle. Thus, the risk of a short circuit caused by a fluid coming into contact with an electric/electronic circuit is reduced.

According to a feature, the elongate portion is non-deformable and comprises a hollow cavity filled with a fluid.

The pressure of the fluid in the hollow cavity increases when a user applies a press action to the first deformable surface. The increment in the pressure of the fluid produces a press action in the pressure sensor. Thus, the pressure sensor detects a press action which has been applied to the first deformable surface.

According to an embodiment, the food or beverage machine further comprises a light source associated with the pressure-sensitive actuator, the pressure-sensitive actuator comprising a third end and a second elongate portion connecting the first end and the third end, the third end comprising a surface which is situated such that it is illuminated by the light source, the second elongate portion being configured to transmit to the first end light originating from the light source.

Therefore, the first end is illuminated by the light source which is situated close to the third end of the actuator and which is situated at a distance from the receptacle for accommodating portioned beverage ingredients in which fluid is injected.

According to a feature, the second elongate portion is non-deformable and comprises a hollow cavity filled with a fluid.

According to a feature, the inner walls of the hollow cavity are formed by a reflective surface.

Thus, light originating from the light source is reflected by the inner walls and travels inside the hollow cavity until it arrives at the first deformable surface which is thereby illuminated.

According to an embodiment, the fluid comprises a light-transmitting medium.

Thus, light originating from the light source is transmitted to the first end which is thereby illuminated.

Therefore, transmission of light through the light-transmitting medium improves the illumination of the first end of the actuator.

According to an embodiment, the elongate portion comprises a first tube connecting the first end of the actuator and the second end of the actuator and the second elongate portion comprises a second tube connecting the first end of the actuator and the third end of the actuator.

According to a particular embodiment, the elongate portion and the second elongate portion form a T-junction.

According to an embodiment, the actuator comprises a flexible push button.

According to a feature, the flexible push button comprises a surface portion constituting the first deformable surface.

Thus, when a user pushes the flexible push button on the first deformable surface, the fluid in the elongate portion transmits a pressure to the second deformable surface.

According to another feature, the surface portion is at least partially transparent.

This transparent surface may be illuminated by light originating from the light source.

According to an embodiment, the flexible push button comprises a transparent pad.

Thus, the press action applied to the second deformable surface may be greater enabling a less sensitive pressure sensor may be used.

According to the invention, the food or beverage preparation machine comprises a machine head having a receptacle for accommodating a portioned beverage ingredient and in which a fluid is injected for preparing a beverage and a machine body having functional components, the control panel being situated at the machine head and the pressure sensor being situated at the body machine.

Thus, in this beverage preparation machine, the pressure sensor is not situated close to the receptacle where a liquid is injected in order to prepare a beverage.

According to an embodiment, the machine head and the machine body are separated by a leak-tight wall.

Thus, the safety in such a beverage preparation machine is further improved.

As used in this specification, the words "comprises", "comprising", and similar words, are not to be interpreted in an exclusive or exhaustive sense. In other words, they are intended to mean "including, but not limited to.

### Brief description of the drawings

Additional features and advantages of the present invention are described in, and will be apparent from, the description of the presently preferred embodiments which are set out below with reference to the drawings in which:
**Figure 1** illustrates a beverage preparation machine according to an embodiment the invention; and
**Figure 2** illustrates a scheme representing a section view of a part of the machine comprising the control panel and elements in association therewith, according to an embodiment of the invention.

### Detailed description of the invention

The invention is further described with reference to the following examples. It will be appreciated that the invention as claimed is not intended to be limited in any way by these examples.

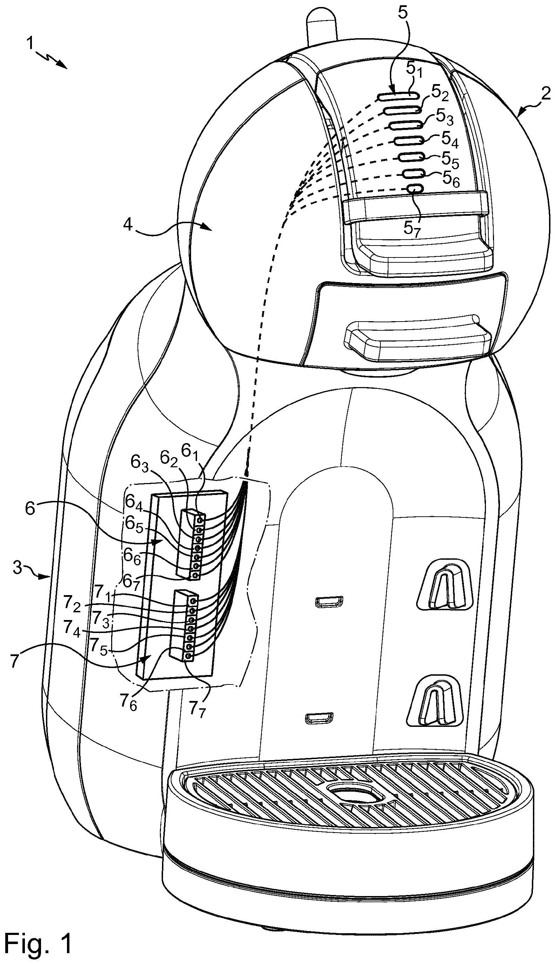

**Figure 1** illustrates a liquid food or beverage preparation machine 1 according to one embodiment. The beverage preparation machine 1 comprises a machine head 2 and a machine body 3.

To simplify the description, the food or beverage preparation machine 1 will be named below as beverage preparation machine 1. However, the present invention is also suitable for preparing food.

The beverage preparation machine 1 comprises a receptacle (not illustrated in the drawings) for accommodating portioned beverage ingredients and a fluid injection system (not illustrated in the drawings) for injecting a fluid into the receptacle when preparing a beverage. The receptacle and the fluid injection system are positioned at the machine head 2.

The beverage preparation machine 1 comprises a control panel 5 allowing a user to command the preparation of a beverage and to set the values of certain beverage preparation parameters or functional parameters.

For example, a user may select a recipe, a volume or a temperature respectively from among a set of recipes, a set of volumes or a set of temperatures. Thus, a beverage preparation parameter is set to a predetermined value which depends on the selection made by the user.

The control panel 5 is situated at the machine head 2 such that it is accessible to a user of the beverage preparation machine 1.

The control panel 5 comprises at least one actuator 5₁, 5₂ ... 5₇ for setting at least one beverage preparation parameter to a predetermined value.

The actuators 5₁, 5₂ ... 5₇ are pressure-sensitive.

In the represented embodiment, the control panel 5 comprises a set of actuators 5₁, 5₂, ... 5₇ forming a selection device, for selecting, for example, a volume for the beverage to be prepared from among a set of volumes. Thus, in this example, each actuator from among the set of actuators 5₁, 5₂, 5₃... 5₇ is associated with a predetermined value of volume.

Of course, the control panel 5 may comprise actuators for setting other beverage preparation parameters, such as a temperature, a pressure, an infusion time, a recipe, or an actuator for turning the machine on and off.

The beverage preparation machine 1 comprises a pressure sensor 6₁, 6₂ ... 6₇ associated with each actuator 5₁, 5₂ ... 5₇.

Thus, in the represented embodiment, the beverage preparation machine 1 comprises a set of pressure sensors 6, each pressure sensor 6₁... 6₇ being respectively associated with each actuator 5₁... 5₇.

The set of pressure sensors 6 is positioned at the machine body 3, at a distance from the control panel 5.

At the machine body 3, the beverage preparation machine 1 comprises functional components and a controlling unit (not illustrated in the drawings) for managing the functional components in order to prepare a beverage.

The controlling unit communicates with the pressure sensor, the controlling unit setting at least one beverage preparation parameter to a predetermined value when the at least one actuator receives a press action from a user.

Thus, a beverage is prepared taking into account beverage preparation parameters, certain of them being set by a user of the beverage preparation machine 1.

In the represented embodiment, a user may select a volume value for a beverage by means of the control panel 5. For example, the user applies an action, such as a press action, to one of the actuators 5₁... 5₇.

Depending on the selected value, the controlling unit set a beverage preparation parameter relative to the volume of beverage to a predetermined value.

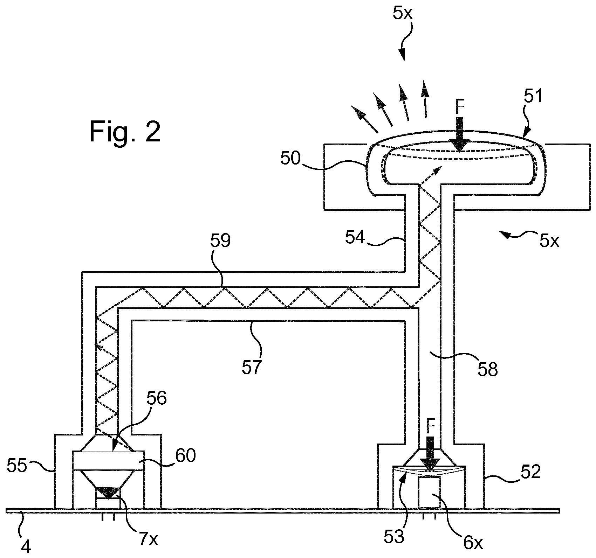

The functioning and interactions of the elements presented above will be described in reference to **Figure 2****.**

In the represented embodiment, the beverage machine 1 comprises a set of light sources 7, each light source 7₁... 7₇ of the set of light sources 7 being associated with a respective actuator 5₁... 5₇.

The set of light sources 7 is positioned at the machine body 3, at a distance of the control panel 5.

Each light source 7₁... 7₇ illuminates a part of the control panel 5 corresponding to the actuator 5₁... 5₇ associated with the light source 7₁... 7₇ when an action, for example a press action, is applied to the actuator 5x.

According to an embodiment, the light source 7₁... 7₇ comprises at least one light-emitting diode (LED).

According to an embodiment, the machine head 2 and the machine body 3 are separated by a leak-tight wall (not illustrated in the drawings).

By virtue of the leak-tight wall, the electric/electronic elements situated in the machine body 3 are isolated from elements in the machine head 2, in particular from the control panel 5, which is in contact with a user and which may be in contact with a fluid in an event of leakage.

Thus, this leak-tight wall separating the machine head 2 and the machine body 3 provides an additional safety measure for users manipulating the control panel 5.

**Figure 2** illustrates a scheme of a section view of a control panel and elements interacting with the control panel.

In this Figure, it can be seen a single actuator 5x, a single pressure sensor 6x and a single light-source 7x.

The pressure sensor 6x and the light source 7x are placed for example in a chip board 4.

The general functioning of these elements will be described with reference to this Figure.

It should be noted that the beverage preparation machine 1 comprises in general a set of actuators, a set of pressure sensors and a set of light-sources, each actuator being associated with a pressure sensor and with a light source, such as in the embodiment described with reference to **Figure 1****.**

According to an embodiment, the actuator 5x comprises:
- a first end 50 comprising a first deformable surface 51 which is configured to receive a press action F from a user;
- a second end 52 comprising a second deformable surface 53 which is in physical contact with said pressure sensor 6x; and
- an elongate portion 54 extending between the first end 50 and the second end 52.

The elongate portion 54 is configured to transfer to the second end 52 a pressure that has been generated at said first end 50, such that when a press action F is applied to the first deformable surface 51, the pressure is transferred to the second deformable surface 53 by the elongate portion 54 and is applied to the pressure sensor 6x.

According to the embodiment described with reference to **Figure 2****,** the actuator 5x comprises a third end 55 and a second elongate portion 57 extending between said first end 50 and said third end 55, the third end 55 comprising a surface 56 which is situated such that it is illuminated by the light source 7x.

The second elongate portion 57 is configured to transmit light originating from the light source 6x to the first end 50.

The first elongate portion 54 and the second elongate portion 56 are non-deformable and comprise a hollow cavity 58 filled with a fluid.

The elongate portions 54, 57 being non-deformable, when a user applies a press action F to the first deformable surface 51, the fluid pressure increases and a press action F' is applied to the pressure sensor 6x by the fluid in the hollow cavity 58. The pressure sensor 6x generates a signal which is transmitted to the controlling unit, the signal indicating that the actuator 5x associated with the pressure sensor 6x has been pushed.

Next, the controlling unit sets a beverage preparation parameter accordingly.

In embodiments in which the beverage preparation machine 1 comprises a light source 7x, the light source 7x is triggered by the controlling unit in order to be switched on.

The fluid in the hollow cavity 58 comprises a light-transmitting medium such as a fluorescent liquid, which transmits light generated by the light source 7x to the first end 50, the first deformable surface 51 being thereby illuminated.

According to an embodiment, the fluid in the hollow cavity 58 comprises fluorescein.

The fluorescence of such a fluorescent liquid is very intense and the interval of time elapsed from the excitation of molecules constituting the fluorescein to the light emission by the molecules is very short.

Thus, the light originating from the light source is transmitted rapidly to the first end 50.

According to an embodiment, an optical lens 60 may be disposed between the light source 7x and the third surface 56 such that light originating from the light source 7x is focused before entering the second elongated portion 59.

According to an embodiment, the elongate portion 54 comprises a first tube connecting the first end 50 of the actuator 5x and the second end 52 of the actuator 5x, and the second elongate portion 57 comprises a second tube connecting the first end 50 of the actuator 5x and the third end 55 of the actuator 5x.

It should be noted that in the described embodiment the first tube and the second tube communicate with each other.

For example, the tube corresponding to the elongate portion 54 and the second tube corresponding to the second elongate portion 57 form a T-junction.

According to another embodiment, the first tube and the second tube do not communicate with each other.

According to an embodiment, the first elongate portion 54 and the second elongate portion 57 comprise a material able to reflect light.

For example, the elongate portions 54, 57 comprise a transparent material, for example plastic, the transparent material and the fluid in the hollow cavity 58 being selected such that the respective reflective index are calculated such that the light originating from the light source 7x is reflected by the transparent material and travels inside the hollow cavity 58 until it arrives at actuator 5x.

For example, the reflective index of the transparent material is greater that the reflective index of the fluid in the hollow cavity 58.

In this embodiment, in order to enhance the reflection of the light inside the elongate portions 54, 57, the angle of incidence of the light arriving at the inner walls 59 of the hollow cavity 58 is greater than a predetermined value.

In another embodiment, the inner walls 59 of the hollow cavity 58 are formed by a reflective surface, for example a metallic reflective surface, such that the light originating from the light source 7x is reflected by the inner walls 59 and travels inside the hollow cavity 58 until it arrives at the first end 50 of the actuator 5x, the first deformable surface 51 being thereby illuminated.

According to the example described in reference to **Figure 2****,** the actuator 5x comprises a flexible push button comprising a surface portion constituting the first deformable surface 51.

This surface portion may present different shapes, for example a circular, squared or oblong shape.

For example, the surface portion constituting the first deformable surface 51 is transparent such that it is illuminated by light originating from the associated light source 7x.

It should be understood that various changes and modifications to the presently preferred embodiments described herein will be apparent to those skilled in the art. Such changes and modifications can be made without departing from the scope of the present invention covered by the appended claims.

## Claims

1. Interface system for a food or beverage preparation machine (1), comprising a machine head (2) having a receptacle for accommodating a portioned beverage ingredient and in which a fluid is injected for preparing food or a beverage, said interface system also comprising a machine body (3) comprising functional components, said interface system further comprising a control panel (5), said control panel (5) comprising an actuator (5x) for setting at least one food or beverage preparation parameter of the food or beverage preparation machine (1) to a predetermined value, said interface system comprising a pressure sensor (6x) which may be electronically connected to a controlling unit, and that is associated with said actuator, said actuator (5x) being pressure-sensitive and comprising a first end (50) with a first deformable surface (51) which is configured to receive a press action from a user, a second end (52) with a second deformable surface (53) which is in physical contact with said pressure sensor (6x), and an elongate portion (54) connecting said first end (50) and said second end (52), said elongate portion (54) being configured to transfer to said second end (52) a pressure that has been generated at said first end (50), such that when a press action (F) is applied to said first deformable surface, said pressure is transferred to said second deformable surface (53) by said elongate portion and is applied to said pressure sensor (6x) so as to set said at least one food or beverage preparation parameter, **characterized in that** said control panel (5) is situated at said machine head (2) and said pressure sensor (6x) is situated at said machine body (3).

2. An interface system according to claim 1, wherein said elongate portion is non-deformable and comprises a hollow cavity (58) filled with a fluid.

3. An interface system according to any one of claims 1 or 2, further comprising a light source (7x) associated with the pressure-sensitive actuator (5x), said pressure-sensitive actuator (5x) comprising a third end (55) and a second elongate portion (57) connecting said first end (50) and said third end (55), said third end (55) comprising a surface (56) which is situated such that it is illuminated by said light source (7x), said second elongate portion (57) being configured to transmit to said first end (50) light originating from said light source (7x).

4. An interface system according to claim 3, wherein the second elongate portion (57) is non-deformable and comprises a hollow cavity (58) filled with a fluid.

5. An interface system according to claim 4, wherein the inner walls (59) of the hollow cavity (58) are formed by a reflective surface.

6. An interface system according to any one of claims 4 or 5, wherein said fluid comprises a light-transmitting medium.

7. An interface system according to any one of claims 3 to 6, wherein said elongate portion (54) comprises a first tube connecting the first end (50) of the actuator and the second end (52) of the actuator (5x), and said second elongate portion comprises a second tube connecting the first end of the actuator and the third end (55) of the actuator (5x).

8. An interface system according to any one of claims 3 to 7, wherein said elongate portion (54) and said second elongate portion (57) form a T-junction.

9. An interface system according to any one of claims 1 to 8, wherein the actuator (5x) comprises a flexible push button.

10. An interface system according to claim 9, wherein said flexible push button comprises a surface portion constituting said first deformable surface (51).

11. An interface system according to claim 8, wherein said surface portion is at least partially transparent.

12. An interface system according to any one of claims 9 to 11, wherein the flexible push button comprises a transparent pad.

13. An interface system according to any of the preceding claims, wherein said machine head (2) and said machine body (3) are separated by a leak-tight wall.

## Patentansprüche

1. Schnittstellensystem für eine Nahrungsmittel- oder Getränkeherstellungsmaschine (1),
umfassend ein Maschinenoberteil (2) mit einem Behälter zur Aufnahme eines portionierten Getränkebestandteils, in den ein Fluid zur Herstellung eines Nahrungsmittels oder Getränks eingespritzt wird, wobei das Schnittstellensystem auch einen Maschinenkörper (3) mit funktionellen Komponenten umfasst, wobei das Schnittstellensystem ferner ein Bedienfeld (5) umfasst, wobei das Bedienfeld (5) ein Betätigungselement (5x) zum Einstellen mindestens eines Nahrungsmittel- oder Getränkeherstellungsparameters der Nahrungsmittel- oder Getränkeherstellungsmaschine (1) auf einen vorbestimmten Wert umfasst, wobei das Schnittstellensystem einen Drucksensor (6x) umfasst, der elektronisch mit einer Steuereinheit verbunden werden kann und der dem Betätigungselement zugeordnet ist, wobei das Betätigungselement (5x) druckempfindlich ist und ein erstes Ende (50) mit einer ersten verformbaren Oberfläche (51) umfasst, die dafür konfiguriert ist, eine Presswirkung von einem Benutzer aufzunehmen, ein zweites Ende (52) mit einer zweiten verformbaren Oberfläche (53) umfasst, die in physischem Kontakt mit dem Drucksensor (6x) steht, und einen länglichen Abschnitt (54) umfasst, der das erste Ende (50) und das zweite Ende (52) verbindet, wobei der längliche Abschnitt (54) dafür konfiguriert ist, einen am ersten Ende (50) erzeugten Druck auf das zweite Ende (52) zu übertragen, so dass, wenn eine Presswirkung (F) auf die erste verformbare Oberfläche ausgeübt wird, der Druck durch den länglichen Abschnitt auf die zweite verformbare Oberfläche (53) übertragen und auf den Drucksensor (6x) ausgeübt wird, um den mindestens einen Nahrungsmittel- oder Getränkeherstellungsparameter einzustellen, **dadurch gekennzeichnet, dass** das Bedienfeld (5) am Maschinenoberteil (2) angeordnet ist und der Drucksensor (6x) am Maschinenkörper (3) angeordnet ist.

2. Schnittstellensystem nach Anspruch 1, wobei der längliche Abschnitt nicht verformbar ist und einen Hohlraum (58) umfasst, der mit einem Fluid gefüllt ist.

3. Schnittstellensystem nach einem der Ansprüche 1 oder 2, ferner umfassend eine Lichtquelle (7x), die mit dem druckempfindlichen Betätigungselement (5x) verknüpft ist, wobei das druckempfindliche Betätigungselement (5x) ein drittes Ende (55) und einen zweiten länglichen Abschnitt (57) umfasst, der das erste Ende (50) und das dritte Ende (55) verbindet, wobei das dritte Ende (55) eine Oberfläche (56) umfasst, die so angeordnet ist, dass sie von der Lichtquelle (7x) beleuchtet wird, wobei der zweite längliche Abschnitt (57) dafür konfiguriert ist, von der Lichtquelle (7x) ausgehendes Licht an das erste Ende (50) zu übertragen.

4. Schnittstellensystem nach Anspruch 3, wobei der zweite längliche Abschnitt (57) nicht verformbar ist und einen Hohlraum (58) umfasst, der mit einem Fluid gefüllt ist.

5. Schnittstellensystem nach Anspruch 4, wobei die Innenwände (59) des Hohlraums (58) durch eine reflektierende Oberfläche gebildet sind.

6. Schnittstellensystem nach einem der Ansprüche 4 oder 5, wobei das Fluid ein lichtdurchlässiges Medium umfasst.

7. Schnittstellensystem nach einem der Ansprüche 3 bis 6, wobei der längliche Abschnitt (54) ein erstes Rohr umfasst, das das erste Ende (50) des Betätigungselements und das zweite Ende (52) des Betätigungselements (5x) verbindet, und der zweite längliche Abschnitt ein zweites Rohr umfasst, das das erste Ende des Betätigungselements und das dritte Ende (55) des Betätigungselements (5x) verbindet.

8. Schnittstellensystem nach einem der Ansprüche 3 bis 7, wobei der längliche Abschnitt (54) und der zweite längliche Abschnitt (57) eine T-Verbindung bilden.

9. Schnittstellensystem nach einem der Ansprüche 1 bis 8, wobei das Betätigungselement (5x) einen flexiblen Druckknopf umfasst.

10. Schnittstellensystem nach Anspruch 9, wobei der flexible Druckknopf einen Oberflächenabschnitt umfasst, der die erste verformbare Oberfläche (51) bildet.

11. Schnittstellensystem nach Anspruch 8, wobei der Oberflächenabschnitt zumindest teilweise transparent ist.

12. Schnittstellensystem nach einem der Ansprüche 9 bis 11, wobei der flexible Druckknopf eine transparente Auflage umfasst.

13. Schnittstellensystem nach einem der vorstehenden Ansprüche, wobei das Maschinenoberteil (2) und der Maschinenkörper (3) durch eine lecksichere Wand getrennt sind.

## Revendications

1. Système d'interface pour machine de préparation d'aliment ou de boisson (1), comprenant une tête de machine (2) possédant un réceptacle pour recevoir un ingrédient de boisson portionné et dans lequel un fluide est injecté pour la préparation d'une boisson ou d'un aliment, ledit système d'interface comprenant également un corps de machine (3) comprenant des composants fonctionnels, ledit système d'interface comprenant en outre un panneau de commande (5), ledit panneau de commande (5) comprenant un actionneur (5x) pour définir au moins un paramètre de préparation d'aliment ou de boisson de la machine de préparation d'aliment ou de boisson (1) à une valeur prédéterminée, ledit système d'interface comprenant un capteur de pression (6x) qui peut être connecté par voie électronique à une unité de commande et qui est associé audit actionneur, ledit actionneur (5x) étant sensible à la pression et comprenant une première extrémité (50) avec une première surface déformable (51) qui est conçue pour recevoir une action de pression de l'utilisateur, une deuxième extrémité (52) avec une deuxième surface déformable (53) qui est en contact physique avec ledit capteur de pression (6x) et une partie allongée (54) reliant ladite première extrémité (50) et ladite deuxième extrémité (52), ladite partie allongée (54) étant configurée pour transférer à ladite deuxième extrémité (52) une pression qui a été générée au niveau de ladite première extrémité (50), de sorte que lorsqu'une action de pression (F) est appliquée à ladite première surface déformable, ladite pression soit transférée vers ladite deuxième surface déformable (53) par ladite partie allongée et soit appliquée audit capteur de pression (6x) de façon à définir ledit au moins un paramètre de préparation d'aliment ou de boisson, **caractérisé en ce que ledit** panneau de commande (5) est situé au niveau de ladite tête de machine (2) et ledit capteur de pression (6x) est situé au niveau dudit corps de machine (3).

2. Système d'interface selon la revendication 1, dans lequel ladite partie allongée est non déformable et comprend une cavité creuse (58) remplie d'un fluide.

3. Système d'interface selon l'une quelconque des revendications 1 ou 2, comprenant en outre une source de lumière (7x) associée à l'actionneur (5x) sensible à la pression, ledit actionneur (5x) sensible à la pression comprenant une troisième extrémité (55) et une deuxième partie allongée (57) reliant ladite première extrémité (50) et ladite troisième extrémité (55), ladite troisième extrémité (55) comprenant une surface (56) qui est située de manière à être éclairée par ladite source de lumière (7x), ladite seconde partie allongée (57) étant conçue pour transmettre à ladite première extrémité (50) de la lumière provenant de ladite source de lumière (7x).

4. Système d'interface selon la revendication 3, dans lequel la seconde partie allongée (57) est non déformable et comprend une cavité creuse (58) remplie d'un fluide.

5. Système d'interface selon la revendication 4, dans lequel les parois internes (59) de la cavité creuse (58) sont formées par une surface réfléchissante.

6. Système d'interface selon l'une quelconque des revendications 4 ou 5, dans lequel ledit fluide comprend un milieu de transmission de lumière.

7. Système d'interface selon l'une quelconque des revendications 3 à 6, dans lequel ladite partie allongée (54) comprend un premier tube reliant la première extrémité (50) de l'actionneur et la deuxième extrémité (52) de l'actionneur (5x) et ladite seconde partie allongée comprend un deuxième tube reliant la première extrémité de l'actionneur et la troisième extrémité (55) de l'actionneur (5x).

8. Système d'interface selon l'une quelconque des revendications 3 à 7, dans lequel ladite partie allongée (54) et ladite seconde partie allongée (57) forment une jonction en T.

9. Système d'interface selon l'une quelconque des revendications 1 à 8, dans lequel l'actionneur (5x) comprend un bouton poussoir flexible.

10. Système d'interface selon la revendication 9, dans lequel ledit bouton poussoir flexible comprend une partie de surface constituant ladite première surface déformable (51).

11. Système d'interface selon la revendication 8, dans lequel ladite partie de surface est au moins partiellement transparente.

12. Système d'interface selon l'une quelconque des revendications 9 à 11, dans lequel le bouton poussoir flexible comprend un bloc transparent.

13. Système d'interface selon l'une quelconque des revendications précédentes, dans lequel ladite tête de machine (2) et ledit corps de machine (3) sont séparés par une paroi étanche aux fuites.
